# NOUVEAU FASCICULE DE BREVET EUROPEEN

(11) **EP 2 643 643 B2**
(45) Date de publication et mention de la décision concernant l'opposition: **05.01.2022**
(45) Mention de la délivrance du brevet: 05.12.2018
(21) Numéro de dépôt: 11782148.8
(22) Date de dépôt: 15.11.2011
(51) Int. Cl.: F25B 5/02, F25B 6/04, F25B 25/00, B60H 1/00

(54) **DISPOSITIF DE CONDITIONNEMENT THERMIQUE D'UN HABITACLE DE VÉHICULE**
VORRICHTUNG ZUR WÄRMEREGELUNG EINES INSASSENRAUMS EINES FAHRZEUGES
DEVICE FOR THE THERMAL CONDITIONING OF A PASSENGER COMPARTMENT OF A VEHICLE

(30) Priorité: 22.11.2010 FR 1004533
(43) Date de publication de la demande: 02.10.2013
(73) Titulaire: Valeo Systemes Thermiques, 78320 Le Mesnil Saint Denis (FR)
(72) Inventeur: AOUN, Bernard, F-75013 Paris (FR); YAHIA, Mohamed, F-75005 Paris (FR)
(74) Mandataire: Valeo Systèmes Thermiques
(86) Numéro de dépôt international: PCT/EP2011/070106
(87) Numéro de publication internationale: WO 2012/069334

(56) Documents cités:
- EP-A1- 1 489 367
- DE-A1- 10 346 960
- JP-A- H06 143 974
- US-A1- 2003 200 764
- US-A1- 2005 067 158

## Description

Le domaine de la présente invention est celui des véhicules dont la propulsion est assurée par au moins un moteur électrique. Ce domaine englobe les véhicules électriques, propulsés uniquement par un moteur électrique, et les véhicules hybrides, propulsés par un moteur électrique et par un moteur à combustion interne. Plus particulièrement, l'invention vise un dispositif de conditionnement thermique d'un habitacle d'un tel véhicule.

La raréfaction des ressources énergétiques pour les moteurs à combustion interne et l'impact environnemental de tels moteurs à combustion interne ont conduit les constructeurs automobiles à développer des véhicules fonctionnant grâce à des sources d'énergie alternatives. La propulsion du véhicule par l'énergie électrique est une solution représentant un choix intéressant. Cependant, l'absence d'un moteur à combustion interne, pour les véhicules électriques, ou l'indisponibilité momentanée de celui-ci, pour les véhicules hybrides, privent le véhicule d'une source d'énergie pour assurer un conditionnement thermique adapté de l'habitacle, en particulier un chauffage de ce dernier.

Pour palier à ce défaut, il a été proposé d'utiliser une boucle de climatisation, apte à assurer une circulation d'un fluide réfrigérant, organisée et configurée de sorte à assurer un chauffage et/ou un refroidissement d'un flux d'air intérieur destiné à être envoyé dans l'habitacle du véhicule. La boucle de climatisation fonctionne ainsi selon un mode dit « refroidissement », dans lequel un premier échangeur de chaleur refroidit le flux d'air intérieur distribué dans l'habitacle alors qu'un deuxième échangeur de chaleur assure le refroidissement du fluide réfrigérant en évacuant des calories dans un flux d'air extérieur à l'habitacle. La boucle de climatisation fonctionne également dans un mode dit « chauffage », ou mode dit « pompe à chaleur », dans lequel le premier échangeur de chaleur chauffe le flux d'air intérieur distribué dans l'habitacle. Le deuxième échangeur de chaleur assure la fonction d'évaporation, le flux d'air extérieur étant refroidi par son passage au travers du deuxième échangeur de chaleur.

En mode dit « chauffage », ou mode dit « pompe à chaleur », selon des conditions climatiques particulières, le deuxième échangeur de chaleur est susceptible de se recouvrir de givre. Ce phénomène est le résultat du refroidissement opéré par le deuxième échangeur de chaleur qui abaisse la température du flux d'air extérieur le traversant au voisinage de 0°C, provoquant ainsi un gel de l'humidité présente dans le flux d'air extérieur. Cette situation est problématique car le givre obstrue le passage du flux d'air extérieur au travers du deuxième échangeur de chaleur, ce qui dégrade fortement les performances de la boucle de climatisation en mode dit « chauffage ». Une telle dégradation peut engendrer une déficience de la fonction « chauffage » du flux d'air intérieur distribué dans l'habitacle. Le document US2003/200764 divulgue un dispositif de conditionnement thermique selon le préambule de la revendication 1.

Le but de la présente invention propose de résoudre l'inconvénient décrit ci-dessus principalement en prévoyant un évaporateur supplémentaire installé en face avant du véhicule et traversé par le flux d'air extérieur, préalablement chauffé, tout en assurant le chauffage du flux d'air intérieur distribué dans l'habitacle, au moyen d'une boucle de fluide caloporteur.

L'invention a donc pour objet un dispositif de conditionnement thermique ayant les caractéristiques de la revendication 1.

Le premier évaporateur est agencé pour être traversé par le flux d'air extérieur de telle sorte que le flux d'air extérieur traverse successivement le deuxième échangeur de chaleur extérieur puis le premier évaporateur.

Selon cet agencement, le flux d'air extérieur capte ainsi les calories présentes dans le premier échangeur de chaleur extérieur et les transporte vers le premier évaporateur, de sorte à le dégivrer. La première source thermique peut être par exemple un moteur à combustion interne, un moteur électrique ou un élément chauffant électrique.

Selon une configuration particulière, le deuxième évaporateur est installé dans le circuit de fluide réfrigérant, en parallèle du premier évaporateur.

Selon l'invention, le circuit de fluide réfrigérant comprend un organe de gestion de circulation du fluide réfrigérant vers le premier évaporateur et/ou le deuxième évaporateur. L'organe de gestion de circulation est, par exemple, une vanne trois voies capable de contrôler la circulation du fluide réfrigérant soit vers le premier évaporateur, soit vers le deuxième évaporateur, ou vers le premier évaporateur et le deuxième évaporateur simultanément.

A titre d'exemple particulier de réalisation, le circuit de fluide réfrigérant comprend un unique organe de gestion de circulation du fluide réfrigérant vers le premier évaporateur et/ou le deuxième évaporateur. Dans cette configuration, on constate que le circuit de fluide réfrigérant comprend un seul et unique organe de gestion de circulation pour assurer les divers modes de fonctionnement du circuit de fluide réfrigérant, c'est-à-dire, notamment, un mode dit « chauffage », un mode dit « refroidissement », un mode dit « déshumidification » et un mode dit « dégivrage ». La fiabilité et la simplicité d'un tel dispositif de conditionnement thermique sont accrues.

Selon l'invention, l'organe de gestion de la circulation de fluide réfrigérant autorise la circulation simultanée du fluide réfrigérant vers le premier évaporateur et vers le deuxième évaporateur. Une telle configuration permet ainsi d'augmenter la performance du circuit de fluide réfrigérant en augmentant la charge thermique, notamment au moyen de l'utilisation du premier évaporateur, en particulier en mode dit « déshumidification », combiné à l'utilisation du deuxième évaporateur.

Selon encore une caractéristique de l'invention, le premier échangeur de chaleur extérieur est agencé pour être traversé par le flux d'air extérieur préalablement au passage du flux d'air extérieur au travers du premier évaporateur. Dans une telle configuration, le flux d'air extérieur est chauffé à la traversée du premier échangeur de chaleur extérieur. Ainsi, un flux d'air chaud balaye le premier évaporateur, permettant ainsi d'assurer une fonction de dégivrage et/ou de limitation du givrage du premier évaporateur.

Selon encore une autre caractéristique de l'invention, le premier échangeur de chaleur extérieur est agencé pour être traversé par le flux d'air extérieur préalablement au passage du flux d'air extérieur au travers du deuxième échangeur de chaleur extérieur.

Avantageusement, le circuit de fluide caloporteur comporte au moins une première boucle comprenant l'échangeur de chaleur fluide/fluide et l'échangeur de chaleur intérieur.

Préférentiellement, le circuit de fluide caloporteur comporte une deuxième boucle comprenant l'échangeur de chaleur fluide/fluide, la première source thermique, par exemple installée en parallèle du deuxième échangeur de chaleur extérieur, et une deuxième source thermique, par exemple installée en série avec un troisième échangeur de chaleur extérieur.

Ainsi, l'échangeur de chaleur fluide/fluide est installé sur une portion de circuit de fluide caloporteur commune à la première boucle et à la deuxième boucle.

Avantageusement, la deuxième boucle comprend le troisième échangeur de chaleur extérieur installé en série avec la deuxième source thermique et agencé pour être traversé par le flux d'air extérieur préalablement à son passage au travers du premier évaporateur.

Avantageusement encore, le troisième échangeur de chaleur extérieur est agencé pour être traversé par le flux d'air extérieur préalablement à son passage au travers du deuxième échangeur de chaleur extérieur.

Selon une variante de réalisation de l'invention, le troisième échangeur de chaleur extérieur et le premier échangeur de chaleur extérieur sont agencés de telle sorte à être traversés par des portions de flux d'air extérieur distinctes.

Avantageusement, l'échangeur de chaleur intérieur et le deuxième évaporateur sont traversés par un flux d'air intérieur destiné à être distribué dans un habitacle d'un véhicule.

On comprend que le dispositif de conditionnement thermique évoqué ci-dessus est apte à fonctionner en un mode dit « refroidissement » permettant de refroidir le flux d'air intérieur, en un mode dit « chauffage » permettant de chauffer le flux d'air intérieur, en un mode dit « déshumidification » permettant de déshumidifier le flux d'air intérieur et en un mode dit « dégivrage » permettant de dégivrer le premier évaporateur.

Un tout premier avantage selon l'invention réside dans la possibilité de maintenir la fonction « chauffage » de l'habitacle quelques que soient les conditions climatiques extérieures au véhicule. En particulier, la fonction « chauffage » est maintenue quand la température de l'air extérieur est inférieure à 5°C, alors que le risque de givrage devient important.

Un autre avantage apparaît quand le dispositif de conditionnement thermique selon l'invention est utilisé en mode dit « déshumidification » du flux d'air intérieur distribué dans l'habitacle. En effet, la présence du premier évaporateur et du deuxième évaporateur permet d'assurer une fonction de « déshumidification » sur deux flux d'air distincts. Une telle organisation offre la possibilité de maintenir une charge thermique importante sur le circuit de fluide réfrigérant et ainsi garantir une élévation de la température du fluide réfrigérant compatible avec le besoin en chauffage dans l'habitacle, en particulier quand la fonction « chauffage » est assurer par un intermédiaire, notamment le fluide caloporteur circulant dans le circuit de fluide caloporteur. On garantit ainsi que, en mode dit « déshumidification », le rendement du circuit de fluide réfrigérant reste élevé.

La présente invention sera mieux comprise, d'autres caractéristiques et avantages apparaîtront encore à la lecture de la description détaillée qui suit comprenant des modes de réalisation donnés à titre illustratif en référence avec les figures annexées. Il sont présentés à titre d'exemples non limitatifs et pourront servir à compléter la compréhension de la présente invention et l'exposé de sa réalisation et, le cas échéant, contribuer à sa définition. En particulier :
- la figure 1 est une vue schématique d'un dispositif de conditionnement thermique selon l'invention en mode dit « refroidissement »,
- la figure 2 est une vue schématique du dispositif de conditionnement thermique selon l'invention en mode dit « chauffage »,
- la figure 3 est une vue schématique du dispositif de conditionnement thermique selon l'invention en mode dit « déshumidification », et
- la figure 4 est une vue schématique du dispositif de conditionnement thermique selon l'invention en mode dit « dégivrage ».

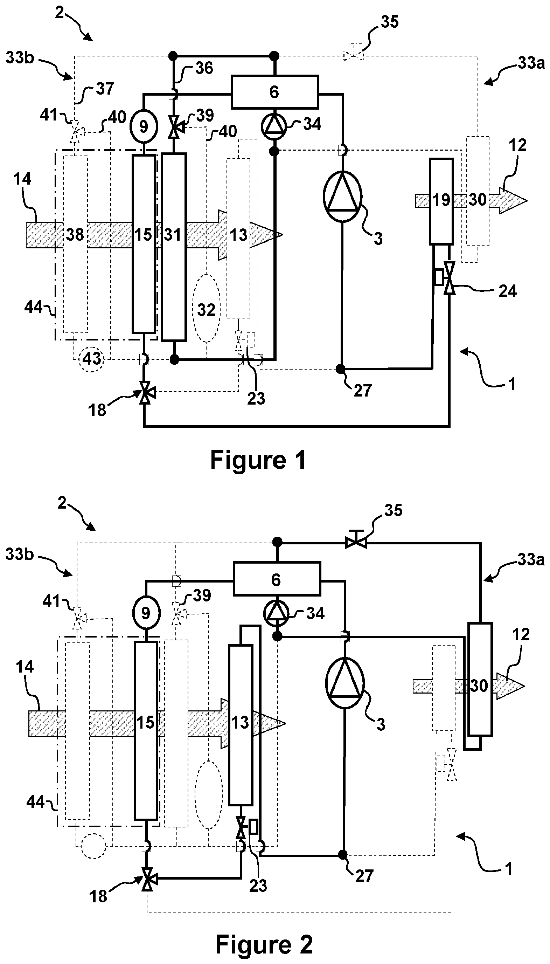

La figure 1 illustre un dispositif de conditionnement thermique selon l'invention comprenant un circuit de fluide réfrigérant 1, dans lequel circule un fluide réfrigérant, et un circuit de fluide caloporteur 2, dans lequel circule un fluide caloporteur.

Le circuit de fluide réfrigérant 1 est une boucle fermée à l'intérieur de laquelle circule le fluide réfrigérant. Le fluide réfrigérant est un fluide réfrigérant sous-critique, par exemple un composé fluoré, notamment le composé connu sous la dénomination R134a, ou un fluide de type supercritique, par exemple le dioxyde de carbone ou R744, ou tout autre fluide analogue.

Le fluide réfrigérant est mis en circulation par un compresseur 3 dont la fonction est d'augmenter la pression et, corrélativement, la température du fluide réfrigérant. Selon la présente invention, le sens de circulation du fluide réfrigérant est identique quelque soit le mode de fonctionnement du dispositif de conditionnement thermique selon l'invention, c'est-à-dire un mode dit « refroidissement », un mode dit « chauffage », un mode dit « déshumidification » ou un mode dit « dégivrage ».

Le compresseur 3 peut être un compresseur mécanique entraîné par le moteur à combustion interne d'un véhicule hybride. L'invention trouve également une application dans le cadre où le compresseur 3 peut être un compresseur électrique. Avantageusement, le compresseur 3 est un compresseur électrique, en particulier de type haute tension, c'est-à-dire adapté pour fonctionner selon une tension comprise entre 350 Volts et 500 Volts.

Par ailleurs, le compresseur 3 est, par exemple, du type à pistons, à palettes, à spirale. De plus, le contrôle du compresseur 3 peut être interne ou externe, c'est-à-dire embarqué sur le compresseur 3 ou intégré sur un contrôleur distinct du compresseur 3.

Le compresseur 3 comprend un orifice d'entrée par lequel arrive le fluide réfrigérant et un orifice de sortie par lequel le fluide réfrigérant comprimé est évacué. L'orifice de sortie est raccordé à un échangeur de chaleur fluide/fluide 6.

L'échangeur de chaleur fluide/fluide 6 assure un échange de chaleur entre le fluide réfrigérant circulant dans le circuit de fluide réfrigérant 1 et le fluide caloporteur circulant dans le circuit de fluide caloporteur 2. L'échangeur de chaleur fluide/fluide 6 est donc un échangeur de chaleur dont la fonction est de permettre l'échange de calories entre le fluide réfrigérant et le fluide caloporteur. Selon la présente invention, l'échangeur de chaleur fluide/fluide 6 agit comme un condenseur 6 ou refroidisseur de gaz 6. L'échangeur de chaleur fluide/fluide 6 assure donc une fonction de refroidissement du fluide réfrigérant. L'échangeur de chaleur fluide/fluide 6 conserve cette fonction de refroidissement du fluide réfrigérant quelque soit le mode de fonctionnement du dispositif de conditionnement thermique selon l'invention.

L'échangeur de chaleur fluide/fluide 6 comprend une entrée de fluide réfrigérant raccordée au compresseur 3 et une sortie de fluide réfrigérant connectée à un premier échangeur de chaleur extérieur 15.

En traversant l'échangeur de chaleur fluide/fluide 6, le fluide réfrigérant échange thermiquement avec le fluide caloporteur. A cet effet, l'échangeur de chaleur fluide/fluide 6 comprend donc un orifice d'entrée de fluide caloporteur et un orifice de sortie de fluide caloporteur par lesquels le fluide caloporteur entre et sort respectivement de l'échangeur de chaleur fluide/fluide 6.

Avantageusement, un dispositif de stockage 9 de fluide réfrigérant est disposé entre la sortie de fluide réfrigérant de l'échangeur de chaleur fluide/fluide 6 et le premier échangeur de chaleur extérieur 15. Selon une variante de l'invention, le dispositif de stockage 9 de fluide réfrigérant est une bouteille déshydratante. Alternativement, il peut également s'agir d'un accumulateur installé immédiatement en amont de l'orifice d'entrée du compresseur 3, selon le sens de circulation du fluide réfrigérant dans le circuit de fluide réfrigérant 1.

Le premier échangeur de chaleur extérieur 15 est qualifié d' « extérieur » en ce sens qu'il est agencé pour échanger des calories avec un flux d'air extérieur 14. Le flux d'air extérieur 14 n'est pas destiné à être diffusé dans un habitacle d'un véhicule. Le premier échangeur de chaleur extérieur 15 est donc un échangeur de chaleur air/fluide réfrigérant. Selon la présente invention, le premier échangeur de chaleur extérieur 15 agit en tant que condenseur 15 ou refroidisseur de gaz 15. Le premier échangeur de chaleur extérieur 15 assure donc une fonction de refroidissement du fluide réfrigérant dans tous les modes de fonctionnement du dispositif de conditionnement thermique selon l'invention.

Préférentiellement, le premier échangeur de chaleur extérieur 15 est installé au niveau de la face avant du véhicule. Ainsi agencé, l'échangeur de chaleur extérieur 15 est apte à bénéficier d'un flux d'air dynamique résultant du déplacement du véhicule.

Le fluide réfrigérant traverse le premier échangeur de chaleur extérieur 15 et en sort par un orifice de sortie avant de rejoindre un organe de gestion de circulation 18 du fluide réfrigérant.

L'organe de gestion de circulation 18 est apte à contrôler la circulation du fluide réfrigérant vers un premier évaporateur 13 et/ou vers un deuxième évaporateur 19.

Selon le mode de fonctionnement du dispositif de conditionnement thermique selon l'invention, l'organe de gestion de circulation 18 autorise la circulation du fluide réfrigérant en provenance du premier échangeur de chaleur extérieur 15 soit uniquement vers le premier évaporateur 13, soit uniquement vers le deuxième évaporateur 19, soit simultanément vers le premier évaporateur 13 et le deuxième évaporateur 19, et avantageusement dans des proportions de fluide réfrigérant variables.

A cet effet, l'organe de gestion de circulation 18 est, par exemple, une vanne « trois-voies » 18, notamment à commande proportionnelle.

L'organe de gestion de circulation 18 comprend une voie d'entrée raccordée à l'orifice de sortie du premier échangeur de chaleur extérieur 15, une première voie de sortie raccordée à un premier dispositif de détente 23 et une seconde voie de sortie raccordée à un deuxième dispositif de détente 24. Le premier dispositif de détente 23 et le deuxième dispositif de détente 24 assurent respectivement un abaissement de la pression du fluide réfrigérant.

Le premier dispositif de détente 23 est disposé en amont du premier évaporateur 13, selon le sens de circulation du fluide réfrigérant dans le circuit de fluide réfrigérant 1, et le deuxième dispositif de détente 24 est disposé en amont du deuxième évaporateur 19, selon le sens de circulation du fluide réfrigérant dans le circuit de fluide réfrigérant 1.

Le premier dispositif de détente 23 et le deuxième dispositif de détente 24 peuvent, par exemple, prendre la forme d'un orifice à section fixe ou d'un détendeur à commande électronique obéissant à une stratégie de pilotage mise en oeuvre par un organe de contrôle. Le premier dispositif de détente 23 et le deuxième dispositif de détente 24 peuvent également prendre la forme d'un détendeur thermostatique, tels que représentés sur les figures. L'invention n'est pas limitée à une identité de forme entre le premier dispositif de détente 23 et le deuxième dispositif de détente 24. Par exemple, le premier dispositif de détente 23 prend la forme d'un orifice à section fixe alors que le deuxième dispositif de détente 24 prend la forme d'un détendeur thermostatique.

Le premier dispositif de détente 23 autorise le passage du fluide réfrigérant afin qu'il pénètre dans le premier évaporateur 13 via un orifice d'entrée. Le fluide réfrigérant chemine dans le premier évaporateur 13. Selon la présente invention, le premier évaporateur 13 est traversé par le flux d'air extérieur 14. De façon préférentielle et particulièrement avantageuse, le premier évaporateur 13 est installé dans le véhicule de sorte à recevoir le flux d'air extérieur 14 après que ce dernier est déjà traversé le premier échangeur de chaleur extérieur 15. Autrement dit, le premier évaporateur 13 est placé en aval, avantageusement dans le prolongement, du premier échangeur de chaleur extérieur 15, selon le sens de circulation du flux d'air extérieur 14.

Le premier évaporateur 13 comprend encore un orifice de sortie par lequel le fluide réfrigérant sort en direction d'un premier point de raccordement 27.

Dans cette configuration, le premier évaporateur 13 assure une fonction de refroidissement du flux d'air extérieur 14 quand le dispositif de conditionnement thermique est utilisé en mode dit « chauffage », en mode dit « déshumidification » et en mode dit « dégivrage ». Par ailleurs, préférentiellement, le premier évaporateur 13 n'est pas traversé par le fluide réfrigérant quand le dispositif de conditionnement thermique selon l'invention est en mode dit « refroidissement ». On comprend donc que le premier évaporateur 13 est inactif en mode dit « refroidissement ».

La seconde voie de sortie de l'organe de gestion de circulation 18 est raccordée au deuxième dispositif de détente 24, qui autorise le passage du fluide réfrigérant vers un orifice d'entrée du deuxième évaporateur 19. Le deuxième évaporateur 19 comprend également un orifice de sortie par lequel le fluide réfrigérant sort du deuxième évaporateur 19 pour rejoindre le point de raccordement 27.

Le deuxième évaporateur 19 permet une circulation du fluide réfrigérant. Le deuxième évaporateur 19 est traversé par un flux d'air intérieur 12, c'est-à-dire un flux d'air destiné à être envoyé dans l'habitacle du véhicule.

L'abaissement de la pression du fluide réfrigérant opéré par le deuxième dispositif de détente 24 permet un refroidissement du flux d'air intérieur 12 circulant au travers du deuxième évaporateur 19.

Le point de raccordement 27 rassemble le fluide réfrigérant en provenance du premier évaporateur 13 et/ou en provenance du deuxième évaporateur 19 pour le canaliser vers le compresseur 3.

Les divers composants du circuit de fluide réfrigérant 1 décrits ci-dessus sont raccordés les uns aux autres par l'intermédiaire de tubulures, de conduites ou de tous moyens aptes à canaliser le fluide réfrigérant.

Comme mentionné précédemment, le dispositif de conditionnement thermique selon l'invention comprend également le circuit de fluide caloporteur 2, dans lequel circule le fluide caloporteur.

Le circuit de fluide caloporteur 2 forme une boucle fermée à l'intérieur de laquelle circule le fluide caloporteur. Le fluide caloporteur est, par exemple, une composition à base d'eau additionnée de glycol.

Le circuit de fluide caloporteur 2 comprend au moins un échangeur de chaleur intérieur 30, un deuxième échangeur de chaleur extérieur 31, traversé par le flux d'air extérieur 14, et une première source thermique 32.

L'échangeur de chaleur intérieur 30 est un échangeur de chaleur traversé par le fluide caloporteur et par le flux d'air intérieur 12. L'échangeur de chaleur intérieur 30 est qualifié d' « intérieur » en ce sens qu'il est agencé pour échanger des calories avec le flux d'air intérieur 12 distribué dans l'habitacle du véhicule. On comprend donc que l'échangeur de chaleur intérieur 30 est un échangeur de chaleur air/fluide caloporteur, également appelé aérotherme. Avantageusement, l'échangeur de chaleur intérieur 30 est installé en aval du deuxième évaporateur 19, selon le sens de circulation du flux d'air intérieur 12.

Le deuxième échangeur de chaleur extérieur 31 est un échangeur de chaleur traversé par le fluide caloporteur et par le flux d'air extérieur 14. Il s'agit donc d'un échangeur air/fluide caloporteur, également appelé radiateur. Le deuxième échangeur de chaleur extérieur 31 est avantageusement installé en face avant du véhicule.

Selon une alternative de réalisation, le deuxième échangeur de chaleur extérieur 31 est agencé en combinaison avec le premier évaporateur 13, en particulier sous la forme d'un module unitaire.

Le premier évaporateur 13 est agencé pour être traversé par le flux d'air extérieur 14, ayant préalablement traversé le deuxième échangeur de chaleur extérieur 31. Autrement dit, le premier évaporateur 13 est installé en aval du deuxième échangeur de chaleur extérieur 31, selon le sens de circulation du flux d'air extérieur 14. Le deuxième échangeur de chaleur extérieur 31 échange ainsi des calories avec le flux d'air extérieur 14, ce qui contribue à élever la température du flux d'air extérieur 14. Cette augmentation de la température du flux d'air extérieur 14 permet de réchauffer le premier évaporateur 13 et ainsi éviter la formation de givre sur celui-ci.

On notera, par ailleurs, que le deuxième échangeur de chaleur extérieur 31 est intercalé entre le premier échangeur de chaleur extérieur 15 et le premier évaporateur 13. Autrement dit, le deuxième échangeur de chaleur extérieur 31 est en aval du premier échangeur extérieur 15 et en amont du premier évaporateur 13, selon le sens de circulation du flux d'air extérieur 14.

Le circuit de fluide caloporteur 2 comprend également la première source thermique 32. La première source thermique 32 peut notamment être un moteur à combustion interne, un moteur électrique ou un élément chauffant électrique. La première source thermique 32 est une source de calories 32. La première source thermique 32 permet de chauffer le fluide caloporteur circulant dans le deuxième échangeur de chaleur extérieur 31.

Ainsi, le dispositif de conditionnement thermique selon l'invention met à profit la présence de la première source thermique 32, par exemple du moteur à combustion interne, pour utiliser les calories dégagées dans le but d'éviter le givrage du premier évaporateur 13. Il est également envisagé, dans le cadre de la présente invention, d'activer spécifiquement la première source thermique 32 en mode dit « dégivrage ».

Le circuit de fluide caloporteur 2 comporte au moins une première boucle 33a. Selon la présente invention, le circuit de fluide caloporteur 2 est divisé en une première boucle 33a et une deuxième boucle 33b. La première boucle 33a et la deuxième boucle 33b comprennent une partie commune, ou branche commune comportant l'échangeur de chaleur fluide/fluide 6 et un moyen de mise en circulation 34, telle qu'une pompe 34, apte à assurer la circulation du fluide caloporteur dans le circuit de fluide caloporteur 2. On comprend ainsi que le moyen de mise en circulation 34 et l'échangeur de chaleur fluide/fluide 6 sont utilisés par la première boucle 33a et par la deuxième boucle 33b.

En complément de l'échangeur de chaleur fluide/fluide 6 et du moyen de mise en circulation 34, la première boucle 33a comprend l'échangeur de chaleur intérieur 30. De plus, avantageusement, la première boucle 33a comprend également une vanne d'arrêt 35 dont la fonction est d'autoriser ou interdire la circulation de fluide caloporteur dans la première boucle 33a.

En complément de l'échangeur de chaleur fluide/fluide 6 et du moyen de mise en circulation 34, la deuxième boucle 33b comprend une première ramification 36, comprenant le deuxième échangeur de chaleur extérieur 31, et une deuxième ramification 37, comprenant un troisième échangeur de chaleur extérieur 38.

Selon la configuration de la présente invention, la première ramification 36 est en parallèle de la deuxième ramification 37.

La première ramification 36 de la deuxième boucle 33b du circuit de fluide caloporteur 2 comprend un premier moyen de commutation 39, tel qu'une vanne « trois-voies » 39, installé en amont du deuxième échangeur de chaleur extérieur 31, selon le sens de circulation du fluide caloporteur dans la première ramification 36. Le premier moyen de commutation 39 permet l'alimentation également d'une première conduite de contournement 40, installée en parallèle du deuxième échangeur de chaleur extérieur 31. La première conduite de contournement 40 comprend la première source thermique 32 et permet de transporter le fluide caloporteur vers la première source thermique 32.

Par ailleurs, selon une autre configuration particulière, il est ainsi possible, par adjonction d'une pompe non représentée dans la première ramification 36 ou dans la première conduite de contournement 40, de définir une boucle fermée constituée de la partie de la première ramification 36 comprenant la première source thermique 32 et le deuxième échangeur de chaleur extérieur 31 et de la première conduite de contournement 40 pour assurer le refroidissement de la première source thermique 32.

La deuxième ramification 37 de la deuxième boucle 33b du circuit de fluide caloporteur 2 comprend un deuxième moyen de commutation 41, tel qu'une vanne « trois-voies » 41, installé en amont du troisième échangeur de chaleur extérieur 38, selon le sens de circulation du fluide caloporteur dans la deuxième ramification 37. Le deuxième moyen de commutation 41 permet l'alimentation également d'une deuxième conduite de contournement 42, installée en parallèle du troisième échangeur de chaleur extérieur 38.

Une deuxième source thermique 43 est également traversée par le fluide caloporteur. La deuxième source thermique 43 est notamment formée par un moteur électrique, apte à assurer le déplacement du véhicule. La deuxième source thermique 43 est installée dans la deuxième ramification 37 en série avec le troisième échangeur de chaleur extérieur 38.

Notamment, la deuxième source thermique 43 est installée immédiatement en aval du troisième échangeur de chaleur extérieur 38 selon le sens de circulation du fluide caloporteur dans la deuxième ramification 37. Ainsi, la deuxième conduite de contournement 42 est installée en parallèle du troisième échangeur de chaleur extérieur 38 et de la deuxième source thermique 43. En particulier, selon une configuration définie, la deuxième conduite de contournement 42 est agencée de telle sorte que le fluide caloporteur ne passe pas au travers du troisième échangeur de chaleur extérieur 38 et de la deuxième source thermique 43 quand le deuxième moyen de commutation 41 l'impose.

Par ailleurs, selon une autre configuration particulière, il est ainsi possible, par adjonction d'une pompe non représentée dans la deuxième ramification 37 ou dans la deuxième conduite de contournement 42, de définir une boucle fermée constituée de la partie de la deuxième ramification 37 comprenant la deuxième source thermique 43 et le troisième échangeur de chaleur extérieur 38 et de la deuxième conduite de contournement 42 pour assurer le refroidissement de la deuxième source thermique 43.

Le troisième échangeur de chaleur extérieur 38 et le premier échangeur extérieur 15 sont installés l'un par rapport à l'autre de telle sorte qu'ils soient traversés par le flux d'air extérieur 14. Selon une disposition avantageuse, le troisième échangeur de chaleur extérieur 38 et le premier échangeur extérieur 15 sont traversés par des portions distinctes du flux d'air extérieur 14.

En pratique, les faces du troisième échangeur de chaleur extérieur 38 et du premier échangeur extérieur 15 traversées par le flux d'air extérieur 14 s'étendent dans un même plan. En particulier, le troisième échangeur de chaleur extérieur 38 occupe entre 50% et 70% de la surface totale traversée par le flux d'air extérieur 14 et le premier échangeur extérieur 15 occupe entre 50% et 30% de la surface totale traversée par le flux d'air extérieur 14.

Selon une variante de réalisation, le troisième échangeur de chaleur extérieur 38 et le premier échangeur externe 15 peuvent former un module unitaire destiné à être installé en face avant du véhicule. Le caractère unitaire est illustré sur les figures par un rectangle en trait mixte interrompu référencé 44.

En particulier, le pouvoir calorifique de la première source thermique 32 est plus important que le pouvoir calorifique de la deuxième source thermique 43. Autrement dit, selon l'exemple de réalisation présenté, le moteur à combustion interne dégage plus de chaleur que le moteur électrique.

On se reporte dorénavant aux figures 1 à 4 afin de détailler divers modes de fonctionnement du dispositif de conditionnement thermique selon l'invention. Par convention, dans les figures 1 à 4, les traits représentés en pointillés illustrent une absence de circulation du fluide dans une partie du circuit et/ou dans les composants et les traits continus illustrent une circulation du fluide dans une partie du circuit et/ou dans les composants.

La figure 1 est une vue schématique du dispositif de conditionnement thermique selon l'invention en mode dit « refroidissement », c'est-à-dire correspondant à un besoin de refroidissement du flux d'air intérieur 12 distribué dans l'habitacle.

En mode dit « refroidissement », le circuit de fluide réfrigérant 1 est configuré de sorte à ce que le fluide réfrigérant comprimé et mis en circulation par le compresseur 3 traverse l'échangeur de chaleur fluide/fluide 6 où le fluide réfrigérant cède des calories au fluide caloporteur. L'échangeur de chaleur fluide/fluide 6 assure ainsi une phase de condensation du fluide réfrigérant nécessaire au cycle thermodynamique. Le fluide réfrigérant est ainsi condensé et poursuit son parcours en traversant le dispositif de stockage 9 et en sort à l'état liquide. Par suite, le fluide réfrigérant traverse le premier échangeur de chaleur extérieur 15, où il subit une phase de sous-refroidissement, c'est-à-dire un abaissement de sa température quand le fluide réfrigérant est à l'état liquide.

L'organe de gestion de circulation 18 est agencé de sorte à interdire la circulation du fluide réfrigérant vers le premier évaporateur 13 et autoriser la circulation du fluide réfrigérant vers le deuxième dispositif de détente 24, au travers duquel il subit un abaissement de pression.

Le fluide réfrigérant ainsi détendu échange avec le flux d'air intérieur 12 dans le deuxième évaporateur 19. Le fluide réfrigérant retourne alors au compresseur 3.

En mode dit « refroidissement », le circuit de fluide caloporteur 2 est configuré de sorte à ce que la première boucle 33a soit inactive, en ce sens que le fluide caloporteur ne circule pas dans la première boucle 33a. A cet effet, la vanne d'arrêt 35 est fermée.

Le moyen de mise en circulation 34 met en circulation le fluide caloporteur qui traverse l'échangeur de chaleur fluide/fluide 6. Le fluide caloporteur sort de l'échangeur de chaleur fluide/fluide 6 à une température plus élevée et circule en direction du deuxième échangeur de chaleur extérieur 31 en passant au travers du premier moyen de commutation 39. Dans ce mode fonctionnement, mode dit « refroidissement », le premier moyen de commutation 39 est configuré de sorte à interdire la circulation du fluide caloporteur dans la première conduite de contournement 40.

Le fluide caloporteur échange avec le flux d'air extérieur 14 en traversant le deuxième échangeur de chaleur extérieur 31. Le fluide caloporteur ainsi refroidi retourne vers le moyen de mise en circulation 34.

Les autres composants du circuit non cités dans la description ci-dessus ne sont pas traversés par le fluide caloporteur dans le mode dit « refroidissement » correspondant à un besoin de refroidissement du flux d'air intérieur 12 distribué dans l'habitacle.

La figure 2 est une vue schématique du dispositif de conditionnement thermique selon l'invention utilisé en mode dit « chauffage », particulièrement utilisé par exemple par temps hivernal, c'est-à-dire correspondant à un besoin de chauffage du flux d'air intérieur 12 distribué dans l'habitacle.

La description qui va être faite du mode dit « chauffage » s'attachera aux différences par rapport au mode dit « refroidissement » décrit à la figure 1. On se reportera donc à la description de la figure 1 pour les éléments identiques fonctionnant de façon analogue.

Contrairement à la figure 1, mode dit « chauffage », le fluide réfrigérant ne traverse pas le deuxième évaporateur 19. A cet effet, l'organe de gestion de circulation 18 est commandé de sorte à envoyer l'intégralité du fluide réfrigérant vers le premier dispositif de détente 23.

Le premier dispositif de détente 23 réduit la pression du fluide réfrigérant qui le traverse. Le fluide réfrigérant pénètre alors dans le premier évaporateur 13 et se trouve chauffé par le flux d'air extérieur 14. Dans la configuration particulière de la présente invention, le flux d'air extérieur 14 a été notamment préalablement chauffé en traversant le premier échangeur extérieur 15. Le fluide réfrigérant poursuit son parcours vers le compresseur 3.

En mode dit « chauffage », le circuit de fluide caloporteur 2 est configuré de sorte à ce que la deuxième boucle 33b soit inactive, en ce sens que le fluide caloporteur ne circule pas dans la deuxième boucle 33b. En conséquence, le fluide caloporteur ne circule donc pas la première ramification 36 et/ou dans la deuxième ramification 37. A cet effet, le premier moyen de commutation 39 et le deuxième moyen de commutation 41 sont configurées en position de fermeture de sorte à interdire la circulation dans la deuxième boucle 33b.

Le moyen de mise en circulation 34 fait circuler le fluide caloporteur dans la première boucle 33a. Le fluide caloporteur traverse l'échangeur de chaleur fluide/fluide 6 pour collecter les calories dégagées par la condensation du fluide réfrigérant.

Le fluide caloporteur, ainsi chauffé, est envoyé vers l'échangeur de chaleur intérieur 30. Pour ce faire, la vanne d'arrêt 35 autorise le passage du fluide caloporteur. Le flux d'air intérieur 12 est ainsi chauffé en traversant l'échangeur de chaleur intérieur 30. Le fluide caloporteur est ainsi refroidi et est à nouveau mis à profit pour la condensation du fluide réfrigérant dans l'échangeur de chaleur fluide/fluide 6.

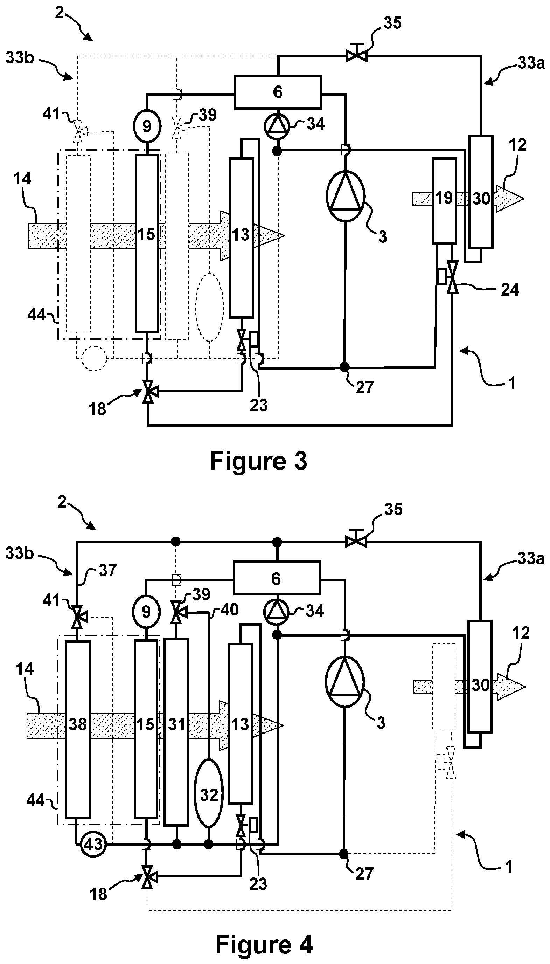

La figure 3 est une vue schématique du dispositif de conditionnement thermique selon l'invention utilisé en mode dit « déshumidification », c'est-à-dire correspondant à un besoin de déshumidification du flux d'air intérieur 12. En pratique, le mode dit « déshumidification » requiert à la fois un chauffage et un refroidissement de flux d'air intérieur 12.

De façon analogue, la description qui va être faite du mode dit « déshumidification » s'attachera aux différences par rapport au mode dit « chauffage » décrit à la figure 2. On se reportera donc à la description de la figure 2 pour les éléments identiques fonctionnant de façon analogue.

En mode dit « déshumidification », l'organe de gestion de circulation 18 contrôle la circulation du fluide réfrigérant à la fois vers le premier évaporateur 13 et vers le deuxième évaporateur 19. Le contrôle de la circulation du fluide réfrigérant est éventuellement ajustable pour gérer les proportions de fluide réfrigérant envoyées vers le premier évaporateur 13 et vers le deuxième évaporateur 19. Alternativement, en mode dit « déshumidification », l'organe de gestion de circulation 18 peut être agencé de sorte à interdire la circulation du fluide réfrigérant vers le premier évaporateur 13 et autoriser la circulation du fluide réfrigérant vers le deuxième évaporateur 19.

Le deuxième évaporateur 19 reçoit le fluide réfrigérant et assèche le flux d'air intérieur 12 préalablement à la distribution dans l'habitacle du véhicule.

Il est avantageux de disposer du premier évaporateur 13 et du deuxième évaporateur 19 traversés par des flux d'air distincts. En effet, le premier évaporateur 13 vient compléter la quantité de fluide réfrigérant détendu par le deuxième évaporateur 19. La charge thermique du circuit de fluide réfrigérant est ainsi augmentée ce qui garantit un rendement élevé du cycle thermodynamique opéré par le circuit de fluide réfrigérant.

Il est ainsi possible d'obtenir une condensation efficace dans l'échangeur de chaleur fluide/fluide 6 ce qui garantit une température élevée du fluide caloporteur circulant dans la première boucle 33a. Le chauffage du flux d'air intérieur 12 peut alors être assuré efficacement par l'échangeur de chaleur intérieur 30.

La figure 4 est une vue schématique du dispositif de conditionnement thermique selon l'invention utilisé en mode dit « dégivrage », c'est-à-dire correspondant à un besoin de dégivrage du premier évaporateur 13.

En particulier, le mode dit « dégivrage » intervient après l'utilisation du dispositif de conditionnement thermique selon l'invention dans le mode dit « chauffage ». Le circuit de fluide réfrigérant est essentiellement configuré de façon analogue au mode de fonctionnement décrit à la figure 2 correspondant au mode dit « chauffage ».

De nouveau, la description qui va être faite du mode dit « dégivrage » s'attachera aux différences par rapport au mode dit « chauffage » décrit à la figure 2. On se reportera donc à la description de la figure 2 pour les éléments identiques fonctionnant de façon analogue.

La particularité du mode dit « dégivrage » réside dans la configuration du circuit de fluide caloporteur 2. Afin de permettre le dégivrage du premier évaporateur 13, la première source thermique 32 est mise à profit. En d'autres termes, on effectue une étape de mise en fonctionnement de la première source thermique 32, par exemple le moteur à combustion interne, le moteur électrique ou l'élément chauffant électrique, de sorte à générer des calories récupérée via le fluide caloporteur.

En mode dit « dégivrage », le premier moyen de commutation 39 est placée dans une configuration permettant d'isoler la première ramification 36 par rapport à la deuxième boucle 33b afin de mettre en relation directe la première source thermique 32 avec le deuxième échangeur de chaleur extérieur 31. Le fluide caloporteur chauffé au contact de la première source thermique 32 traverse le deuxième échangeur de chaleur extérieur 31 permettant un transfert des calories au flux d'air extérieur 14.

En mode dit « dégivrage », le premier évaporateur 13 est traversé par le flux d'air extérieur 14 qui a préalablement chauffé à la traversée du deuxième échangeur de chaleur extérieur 31. Il se produit donc un dégivrage très rapide qui rend à nouveau disponible le dispositif de conditionnement thermique selon l'invention pour une phase de fonctionnement en mode dit « chauffage ». Comme précédemment mentionné, une pompe, non représentée, est agencée afin de permettre la circulation du fluide caloporteur à travers la première source thermique 32 et le deuxième échangeur de chaleur extérieur 31.

En mode dit « dégivrage », le deuxième échangeur de chaleur extérieur 31 n'est plus disponible pour assurer le refroidissement du fluide caloporteur circulant dans la deuxième boucle 33b.

Avantageusement, selon la présente invention, le fluide caloporteur est alors dirigé vers le troisième échangeur de chaleur extérieur 38. A cet effet, le deuxième moyen de commutation 41 autorise le passage du fluide caloporteur vers le troisième échangeur de chaleur extérieur 38. Le fluide caloporteur est ainsi refroidi en traversant le troisième échangeur de chaleur extérieur 38 par échange avec le flux d'air extérieur 14.

Le fluide caloporteur refroidi traverse la deuxième source thermique 43 et assure ainsi le refroidissement de la deuxième source thermique 43, en particulier le moteur électrique. Se faisant, la deuxième source thermique 43 fournit des calories au fluide caloporteur.

De façon particulièrement avantageuse, par exemple en mode tout électrique, la deuxième source thermique 43, notamment en mode « dégivrage », permet de chauffer le flux d'air extérieur 14 avant de traverser le premier évaporateur 13.

Par suite, le fluide caloporteur retourne ensuite en direction du moyen de mise en circulation 34.

Enfin, le deuxième échangeur de chaleur extérieur 31 n'est pas disponible pour le refroidissement du fluide caloporteur issu de l'échangeur de chaleur fluide/fluide 6. En effet, la première source thermique 32 délivre des calories que le deuxième échangeur de chaleur extérieur 31 est chargé de disperser dans le flux d'air extérieur 14. Une telle situation apparaît en mode dit «dégivrage» car la première source thermique 32 est spécifiquement activée dans ce mode.

L'activation de la première source thermique 32 peut également être effectuée dans l'un des modes précédent décrits en relation avec les figures 1 à 3. Dans un tel cas, le refroidissement du fluide caloporteur est alors assuré par la deuxième ramification37 et les composants compris dans la deuxième ramification37.

Selon une alternative de réalisation non représentée, il est envisageable que le dispositif de conditionnement thermique soit dépourvu de deuxième ramification 37.

De plus, les différents modes de fonctionnement décrits précédemment peuvent être pris séparément ou en combinaison afin de réaliser des alternatives de réalisations et diverses configuration d'un dispositif de conditionnement thermique tel que défini selon la présente invention.

## Revendications

1. Dispositif de conditionnement thermique comprenant un circuit de fluide réfrigérant (1), un circuit de fluide caloporteur (2) et un échangeur de chaleur fluide/fluide (6) destiné à permettre un échange thermique entre le fluide réfrigérant et le fluide caloporteur,
- le circuit de fluide réfrigérant (1) comprenant au moins un compresseur (3), un premier échangeur de chaleur extérieur (15) traversé par un flux d'air extérieur (14) et un premier évaporateur (13),
- le circuit de fluide caloporteur (2) comprenant au moins un échangeur de chaleur intérieur (30), une première source thermique (32) et un deuxième échangeur de chaleur extérieur (31) traversé par le flux d'air extérieur (14),
le circuit de fluide réfrigérant (1) comprenant un deuxième évaporateur (19) et **caractérisé en ce que** le premier évaporateur (13) est agencé pour être traversé par le flux d'air extérieur (14),
dans lequel le circuit de fluide réfrigérant (1) comprend un organe de gestion de circulation (18) du fluide réfrigérant vers le premier évaporateur (13) et/ou le deuxième évaporateur (19).

2. Dispositif de conditionnement thermique selon la revendication 1, dans lequel le flux d'air extérieur (14) traverse successivement le deuxième échangeur de chaleur extérieur (31) puis le premier évaporateur (13).

3. Dispositif de conditionnement thermique selon l'une des revendications précédentes, dans lequel le deuxième évaporateur (19) est installé dans le circuit de fluide réfrigérant en parallèle du premier évaporateur (13).

4. Dispositif de conditionnement thermique selon l'une quelconque des revendications précédentes, dans lequel le circuit de fluide réfrigérant (1) comprend un unique organe de gestion de circulation (18) du fluide réfrigérant vers le premier évaporateur (13) et/ou le deuxième évaporateur (19).

5. Dispositif de conditionnement thermique selon l'une quelconque des revendications précédentes, dans lequel le premier échangeur de chaleur extérieur (15) est agencé pour être traversé par le flux d'air extérieur (14) préalablement au passage du flux d'air extérieur (14) au travers du premier évaporateur (13).

6. Dispositif de conditionnement thermique selon l'une quelconque des revendications précédentes, dans lequel le premier échangeur de chaleur extérieur (15) est agencé pour être traversé par le flux d'air extérieur (14) préalablement au passage du flux d'air extérieur (14) au travers du deuxième échangeur de chaleur extérieur (31).

7. Dispositif de conditionnement thermique selon l'une quelconque des revendications précédentes, dans lequel le circuit de fluide caloporteur (2) comporte au moins une première boucle (33a) comprenant l'échangeur de chaleur fluide/fluide (6) et l'échangeur de chaleur intérieur (30),

8. Dispositif de conditionnement thermique selon l'une quelconque des revendications précédentes, dans lequel le circuit de fluide caloporteur (2) comporte une deuxième boucle (33b) comprenant l'échangeur de chaleur fluide/fluide (6), la première source thermique (32) et une deuxième source thermique (43).

9. Dispositif de conditionnement thermique selon la revendication 8, dans lequel la deuxième boucle (33b) comprend un troisième échangeur de chaleur extérieur (38) installé en série avec la deuxième source thermique (43) et agencé pour être traversé par le flux d'air extérieur (14) préalablement au passage du flux d'air extérieur (14) au travers du premier évaporateur (13).

10. Dispositif de conditionnement thermique selon la revendication 9, dans lequel le troisième échangeur de chaleur extérieur (38) est agencé pour être traversé par le flux d'air extérieur (14) préalablement au passage du flux d'air extérieur (14) au travers du deuxième échangeur de chaleur extérieur (31).

11. Dispositif de conditionnement thermique selon l'une quelconque des revendications 9 ou 10, dans lequel le troisième échangeur de chaleur extérieur (38) et le premier échangeur de chaleur extérieur (15) sont agencés de telle sorte à être traversés par des portions de flux d'air extérieur (14) distinctes.

12. Dispositif de conditionnement thermique selon l'une quelconque des revendications précédentes, dans lequel l'échangeur de chaleur intérieur (30) et le deuxième évaporateur (19) sont traversés par un flux d'air intérieur (12) destiné à être distribué dans un habitacle d'un véhicule.

## Patentansprüche

1. Klimatisierungsvorrichtung, die einen Kühlmittelkreislauf (1), einen Wärmeträgerkreislauf (2) und einen Fluid/Fluid-Wärmetauscher (6) umfasst, der dazu bestimmt ist, einen Wärmeaustausch zwischen dem Kühlmittel und dem Wärmeträger zu erlauben,
- wobei der Kühlmittelkreislauf (1) mindestens einen Kompressor (3), einen von einem Außenluftstrom (14) durchquerten ersten äußeren Wärmetauscher (15) und einen ersten Verdampfer (13) umfasst,
- wobei der Wärmeträgerkreislauf (2) mindestens einen inneren Wärmetauscher (30), eine erste Wärmequelle (32) und einen vom Außenluftstrom (14) durchquerten zweiten äußeren Wärmetauscher (31) umfasst,
- wobei der Kühlmittelkreislauf (1) einen zweiten Verdampfer (19) umfasst, und
**dadurch gekennzeichnet, dass** der erste Verdampfer (13) eingerichtet ist, um vom Außenluftstrom (14) durchquert zu werden,
wobei der Kühlmittelkreislauf (1) ein Verwaltungsorgan (18) der Zirkulation des Kühlmittels zum ersten Verdampfer (13) und/oder zum zweiten Verdampfer (19) umfasst.

2. Klimatisierungsvorrichtung nach Anspruch 1, wobei der Außenluftstrom (14) nacheinander den zweiten äußeren Wärmetauscher (31) und dann den ersten Verdampfer (13) durchquert.

3. Klimatisierungsvorrichtung nach einem der vorhergehenden Ansprüche, wobei der zweite Verdampfer (19) in den Kühlmittelkreislauf parallel zum ersten Verdampfer (13) eingebaut ist.

4. Klimatisierungsvorrichtung nach einem der vorhergehenden Ansprüche, wobei der Kühlmittelkreislauf (1) ein einziges Verwaltungsorgan (18) der Zirkulation des Kühlmittels zum ersten Verdampfer (13) und/oder zum zweiten Verdampfer (19) umfasst.

5. Klimatisierungsvorrichtung nach einem der vorhergehenden Ansprüche, wobei der erste äußere Wärmetauscher (15) eingerichtet ist, um vor dem Durchgang des Außenluftstroms (14) durch den ersten Verdampfer (13) vom Außenluftstrom (14) durchquert zu werden.

6. Klimatisierungsvorrichtung nach einem der vorhergehenden Ansprüche, wobei der erste äußere Wärmetauscher (15) eingerichtet ist, um vor dem Durchgang des Außenluftstroms (14) durch den zweiten äußeren Wärmetauscher (31) vom Außenluftstrom (14) durchquert zu werden.

7. Klimatisierungsvorrichtung nach einem der vorhergehenden Ansprüche, wobei der Wärmeträgerkreislauf (2) mindestens einen ersten Kreis (33a) aufweist, der den Fluid/Fluid-Wärmetauscher (6) und den inneren Wärmetauscher (30) umfasst.

8. Klimatisierungsvorrichtung nach einem der vorhergehenden Ansprüche, wobei der Wärmeträgerkreislauf (2) einen zweiten Kreis (33b) aufweist, der den Fluid/Fluid-Wärmetauscher (6), die erste Wärmequelle (32) und eine zweite Wärmequelle (43) umfasst.

9. Klimatisierungsvorrichtung nach Anspruch 8, wobei der zweite Kreis (33b) einen dritten äußeren Wärmetauscher (38) umfasst, der in Reihe mit der zweiten Wärmequelle (43) eingebaut und eingerichtet ist, um vor dem Durchgang des Außenluftstroms (14) durch den ersten Verdampfer (13) vom Außenluftstrom (14) durchquert zu werden.

10. Klimatisierungsvorrichtung nach Anspruch 9, wobei der dritte äußere Wärmetauscher (38) eingerichtet ist, um vor dem Durchgang des Außenluftstroms (14) durch den zweiten äußeren Wärmetauscher (31) vom Außenluftstrom (14) durchquert zu werden.

11. Klimatisierungsvorrichtung nach einem der Ansprüche 9 oder 10, wobei der dritte äußere Wärmetauscher (38) und der erste äußere Wärmetauscher (15) so eingerichtet sind, dass sie von unterschiedlichen Teilen des Außenluftstroms (14) durchquert werden.

12. Klimatisierungsvorrichtung nach einem der vorhergehenden Ansprüche, wobei der innere Wärmetauscher (30) und der zweite Verdampfer (19) von einem Innenluftstrom (12) durchquert werden, der dazu bestimmt ist, in einem Innenraum eines Fahrzeugs verteilt zu werden.

## Claims

1. Thermal conditioning device including a cooling fluid circuit (1), a heat transfer fluid circuit (2), and a fluid/fluid heat exchanger (6) that is intended to enable a thermal exchange between the cooling fluid and the heat transfer fluid,
- the cooling fluid circuit (1) including at least one compressor (3), a first outer heat exchanger (15) through which an outer air flow (14) passes, and a first evaporator (13),
- the heat transfer fluid circuit (2) including at least one inner heat exchanger (30), a first heat source (32) and a second outer heat exchanger (31) through which the outer air flow (14) passes,
the cooling fluid circuit (1) including a second evaporator (19) and **characterized in that** the first evaporator (13) is constructed for the passage of the outer air flow (14),
wherein the cooling fluid circuit (1) includes a unit (18) for managing circulation of the cooling fluid towards the first evaporator (13) and/or the second evaporator (19).

2. Thermal conditioning device according to Claim 1, wherein the outer air flow (14) successively passes through the second outer heat exchanger (31), then through the first evaporator (13).

3. Thermal conditioning device according to one of the preceding claims, wherein the second evaporator (19) is installed in the cooling fluid circuit, in parallel with the first evaporator (13).

4. Thermal conditioning device according to any one of the preceding claims, wherein the cooling fluid circuit (1) includes a single unit (18) for managing circulation of the cooling fluid towards the first evaporator (13) and/or the second evaporator (19).

5. Thermal conditioning device according to any one of the preceding claims, wherein the first outer heat exchanger (15) is constructed for the passage of the outer air flow (14) prior to the passage of the outer air flow (14) through the first evaporator (13).

6. Thermal conditioning device according to any one of the preceding claims, wherein the first outer heat exchanger (15) is constructed for the passage of the outer air flow (14) prior to the passage of the outer air flow (14) through the second outer heat exchanger (31) .

7. Thermal conditioning device according to any one of the preceding claims, wherein the heat transfer fluid circuit (2) includes at least a first loop (33a) including the fluid/fluid heat exchanger (6) and the inner heat exchanger (30).

8. Thermal conditioning device according to any one of the preceding claims, wherein the heat transfer fluid circuit (2) includes a second loop (33b) including the fluid/fluid heat exchanger (6), the first heat source (32) and a second heat source (43).

9. Thermal conditioning device according to Claim 8, wherein the second loop (33b) includes a third outer heat exchanger (38) installed in series with the second heat source (43) and constructed for the passage of the outer air flow (14) prior to the passage of the outer air flow (14) through the first evaporator (13).

10. Thermal conditioning device according to Claim 9, wherein the third outer heat exchanger (38) is constructed for the passage of the outer air flow (14) prior to the passage of the outer air flow (14) through the second outer heat exchanger (31).

11. Thermal conditioning device according to either one of Claims 9 and 10, wherein the third outer heat exchanger (38) and the first outer heat exchanger (15) are constructed for the passage of distinct portions of outer air flow (14).

12. Thermal conditioning device according to any one of the preceding claims, wherein an inner air flow (12) intended to be distributed in the passenger compartment of a vehicle passes through the inner heat exchanger (30) and the second evaporator (19).
